# EUROPÄISCHE PATENTANMELDUNG

(11) **EP 1 415 783 A1**
(43) Veröffentlichungstag der Anmeldung: **06.05.2004**
(21) Anmeldenummer: 02024068.5
(22) Anmeldetag: 29.10.2002
(51) Int. Cl.: B29C 47/06, B29C 47/14

(54) **Extrusionswerkzeug für flache Produkte aus mindestens zwei Lagen, mit einer kammartig geschlitzten Trennmembran anfänglich zwischen den zugeführten Schmelzeströmen**

(71) Anmelder: Reifenhäuser GmbH & Co. Maschinenfabrik, 53839 Troisdorf (DE)
(72) Erfinder: Rübhausen, Anton, 53859 Niederkassel (DE); Kann, Achim, 53819 Neunkirchen (DE)
(74) Vertreter: Müller-Gerbes, Margot, Dipl.-Ing.

(57) **Zusammenfassung**

Die Erfindung betrifft ein Extrusionswerkzeug (1) zur Koextrusion mehrerer Schmelzeströme thermoplastischer Kunststoffe zu einer mehrschichtigen Platte oder Folie, enthaltend
a) eine Extrusionsdüse (2) mit einem zu einem Austrittsspalt (21) führenden Schmelzekanal (20), durch welchen die mehreren Schmelzeströme zu der mehrschichtigen Platte oder Folie in einer Extrusionsrichtung (A) extrudierbar sind;
b) einen Koextrusionsadapter (3) mit einem mit dem Schmelzekanal (20) der Extrusionsdüse (2) verbindbaren Koextrusionskanal (32) und mehreren Zuführkanälen (30, 31), die in den Koextrusionskanal (32) zwecks Zuführung der einzelnen Schmelzeströme einmünden; und
c) ein im Koextrusionsadapter (3) angeordnetes und in den Koextrusionskanal (32) zwischen zwei benachbarten Zuführkanälen (30, 31) hineinragendes flexibles Trennelement (4) zum Trennen der aus den Zuführkanälen (30, 31) austretenden Schmelzeströme vor deren Zusammenführung im Koextrusionskanal (32) unter selbsttätiger Anpassung an die Strömungsverhältnisse in den Zuführkanälen (30, 31),
wobei das Trennelement (4) in Extrusionsrichtung (A) kammartig geschlitzt ausgebildet ist.

## Beschreibung

Die Erfindung betrifft ein Extrusionswerkzeug zur Koextrusion mehrerer Schmelzeströme thermoplastischer Kunststoffe zu einer mehrschichtigen Platte oder Folie, enthaltend
a) eine Extrusionsdüse mit einem zu einem Austrittsspalt führenden Schmelzekanal, durch welchen die mehreren Schmelzeströme zu der mehrschichtigen Platte oder Folie in einer Extrusionsrichtung extrudierbar sind;
b) einen Koextrusionsadapter mit einem mit dem Schmelzekanal der Extrusionsdüse verbindbaren Koextrusionskanal und mehreren Zuführkanälen, die in den Koextrusionskanal zwecks Zuführung der einzelnen Schmelzeströme einmünden; und
c) ein im Koextrusionsadapter angeordnetes und in den Koextrusionskanal zwischen zwei benachbarten Zuführkanälen hineinragendes flexibles Trennelement zum Trennen der aus den Zuführkanälen austretenden Schmelzeströme vor deren Zusammenführung im Koextrusionskanal unter selbsttätiger Anpassung an die Strömungsverhältnisse in den Zuführkanälen.

Ein solches Extrusionswerkzeug ist aus der US-A-3,743,143 bekannt geworden.

Bei der Zusammenführung der unterschiedlichen Schmelzeströme thermoplastischer Kunststoffe innerhalb des Koextrusionsadapters dient das flexible Trennelement dazu, Instabilitäten an den Schichtgrenzen auszugleichen, die durch Abweichungen des gewählten Massendurchsatzverhältnisses von dem zur Geometrieauslegung des Koextrusionsadapters angenommenen Verhältnis auftreten. Das bekannte flexible, beispielsweise aus einem dünnen Edelstahlblech hergestellte Trennelement vermag diese Instabilitäten selbsttätig auszugleichen.

In der Praxis hat sich jedoch gezeigt, daß die Ausbildung eines bestimmten Querprofils in der Schmelzeströmung, welches zur Erzielung konstanter Schichtdicken der zu extrudierenden mehrschichtigen Platte oder Folie notwendig ist, durch das flexible Trennelement behindert wird, so daß es schwierig ist, Folien oder Platten mit gleichmäßigen Einzelschichtdicken herzustellen.

Aufgabe der vorliegenden Erfindung ist es daher, das eingangs genannte Extrusionswerkzeug dahingehend zu verbessern, daß Folien oder Platten mit größerer Dickenkonstanz der einzelnen Schichten herstellbar werden, gleichzeitig jedoch eine flexible Anpassung an unterschiedliche Strömungsverhältnisse der jeweiligen Schmelzeströme der thermoplastischen Kunststoffe erhalten bleibt.

Zur Lösung dieser gestellten Aufgabe schlägt die Erfindung vor, daß das Trennelement in Extrusionsrichtung kammartig geschlitzt ausgebildet ist.

Es hat sich im Rahmen der Erfindung gezeigt, daß durch diese kammartig geschlitzte Ausbildung des Trennelementes dieses in eine Vielzahl von sich in Extrusionsrichtung erstreckenden und durch die Schlitze abgeteilten flexiblen Abschnitten unterteilt wird, wobei sich die einzelnen Abschnitte unabhängig voneinander bewegen und an die jeweiligen Strömungsverhältnisse anpassen können, so daß die Ausbildung eines gewünschten Querprofils in der Strömung quer zur Extrusionsrichtung nicht behindert wird. Im Ergebnis werden sodann Folien oder Platten mit einer deutlich verbesserten Dickentoleranz erhalten.

Nach einer bevorzugten Ausführungsform der Erfindung erstreckt sich das Trennelement über die gesamte Breite des Koextrusionskanals quer zur Extrusionsrichtung, um auch über diese gesamte Breite eventuellen Inhomogenitäten in der Schmelzeverteilung der einzelnen zugeführten Schmelzeströme entgegenzuwirken.

Zur Gewährleistung einer einfachen Herstellung des erfindungsgemäßen Extrusionswerkzeuges kann das Trennelement in einer entsprechend ausgebildeten Einstecknut an einer geeigneten Position im Koextrusionsadapter gehaltert sein.

Nach einer möglichen Ausführungsform der Erfindung erstrecken sich die kammartigen Schlitze im Trennelement nur im in den Koextrusionskanal hineinragenden Bereich des Trennelementes, während der übrige, nicht in den Koextrusionskanal hineinragende Bereich des Trennelementes einstückig, d. h. ohne Unterbrechung durch die kammartigen Schlitze ausgebildet ist und dieser einstückige Bereich in die Einstecknut zur festen Halterung des Trennelementes einsteckbar ist.

Alternativ dazu ist es selbstverständlich auch möglich, das Trennelement aus einer Vielzahl quer zur Extrusionsrichtung aneinandergereihter Einzelabschnitte über die gesamte Breite des Koextrusionskanals auszubilden.

Um einen Austausch der getrennt in den Koextrusionsadapter einströmenden Schmelzeströme im Bereich des Trennelementes, d. h. vor dem Bereich der gewünschten Zusammenströmung zu verhindern, etwa zwischen zwei unterschiedlich ausgelenkten Abschnitten des Trennelementes hindurch, kann das Trennelement nach einer weiteren Ausführungsform der Erfindung auch mehrlagig ausgebildet sein.

In diesem Falle besteht das Trennelement bevorzugt aus mehreren aufeinanderliegenden Trennelementlagen gleichen Aufbaus, z. B. zwei oder drei solchen Trennelementlagen, die gemeinsam ein sodann z. B. zwei- oder dreilagiges Trennelement ausbilden. Eine unerwünschte Zusammenströmung der noch getrennten Schmelzeströme wird dadurch vermieden, daß die einzelnen Schlitze der jeweils kammartig in Extrusionsrichtung geschlitzten Trennelementlagen quer zur Extrusionsrichtung versetzt zueinander angeordnet sind.

Um möglichst homogene Strömungsverhältnisse zu erreichen, sind bevorzugt zwischen den kammartigen Schlitzen des Trennelementes Abschnitte gleicher Größe desselben ausgebildet.

Mit Vorteil laufen die benachbarten Zuführkanäle spitzwinklig in den Koextrusionskanal ein und werden mittels einer entsprechend spitzwinkligen Zuführspitze des Koextrusionsadapters voneinander abgeteilt. Das Trennelement wird sodann in Verlängerung der Zuführspitze in den Koextrusionskanal hineinragend angeordnet, wodurch sich eine besonders gleichförmige Schmelzeverteilung der einzelnen zugeführten Schmelzeströme ergibt.

Das Trennelement kann bevorzugt von einer flexiblen Metallfolie oder auch einem flexiblen Metallblech in einer Dicke von 0,05 bis 0,5 mm gebildet sein, selbstverständlich können jedoch auch andere Werkstoffe, die über eine ausreichende Flexibilität und Temperaturfestigkeit verfügen, zum Einsatz kommen.

Die Extrusionsdüse ist beispielsweise als Breitschlitzdüse mit einem langgestreckten Austrittsspalt ausgebildet, wie er zur Extrusion von sogenannten Flachfolien und Tafeln verwendet wird.

Weitere Einzelheiten und Ausführungsformen der Erfindung werden nachfolgend anhand der Ausführungsbeispiele darstellenden Zeichnung näher erläutert. Es zeigen:
- Figur 1: in schematisierter Darstellung einen Schnitt durch ein erfindungsgemäßes Extrusionswerkzeug,
- Figur 2: in vergrößerter ausschnittsweiser Darstellung die Einzelheit X gemäß Figur 1,
- Figur 3: in teilweise geschnittener Darstellung die Aufsicht auf das erfindungsgemäße Extrusionswerkzeug bei abgenommenem Düsenoberteil,
- Figur 4: die Aufsicht auf eine mögliche Ausführungsform des erfindungsgemäßen Trennelementes,
- Figur 5: die Aufsicht auf eine weitere Ausführungsform des erfindungsgemäßen Trennelementes,
- Figur 6: in schematisierter Darstellung ein Querdickenprofil der Schmelzeströme entlang der Linie C-C in Figur 1,
- Figur 7: die Aufsicht auf eine weitere Ausführungsform des Trennelementes,
- Figur 8: den Schnitt durch das Trennelement entlang der Linie Y-Y in Figur 7.

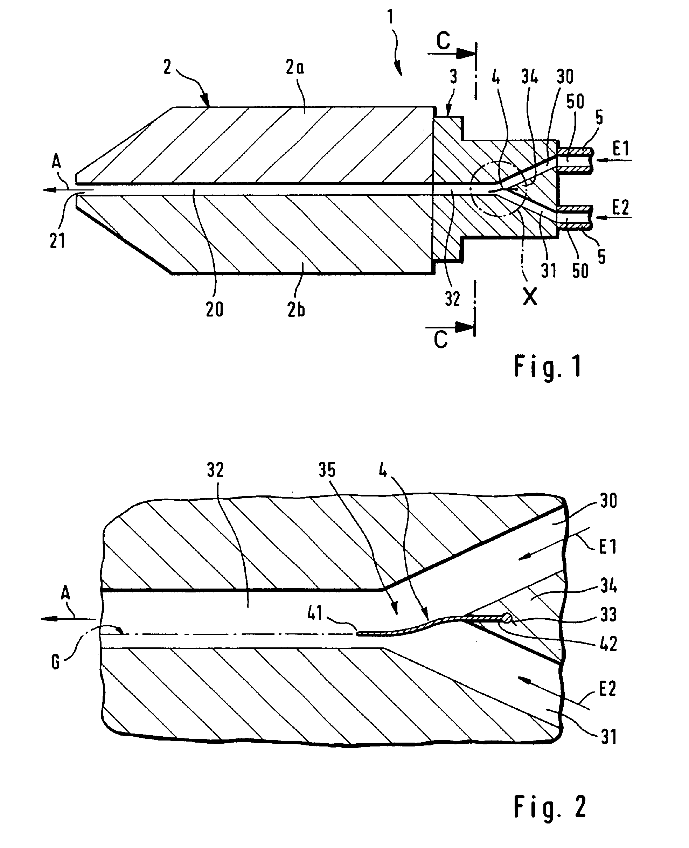

In der Figur 1 ist ein Extrusionswerkzeug 1 zur Koextrusion mehrerer Schmelzeströme thermoplastischer Kunststoffe zu einer mehrschichtigen Platte oder Folie dargestellt.

Das Extrusionswerkzeug 1 umfaßt eine Extrusionsdüse 2 mit einem Düsenoberteil 2a und einem Düsenunterteil 2b, zwischen denen ein Schmelzekanal 20 ausgebildet ist, der zu einem langgestreckten Austrittsspalt 21 führt, aus dem die zu extrudierende mehrschichtige Platte oder Folie in einer Extrusionsrichtung A austritt.

An dem dem Austrittsspalt 21 gegenüberliegenden Ende der Extrusionsdüse 2 ist ein Koextrusionsadapter 3 befestigt, der in seinem Innern einen mit dem Schmelzekanal 20 der Extrusionsdüse 2 verbindbaren und kommunizierenden Koextrusionskanal 32 aufweist.

Auf der der Extrusionsdüse 2 abgewandten Seite des Koextrusionsadapters 3 führen mehrere, hier zwei Zuführkanäle 30, 31 ausgehend von an den Koextrusionsadapter 3 angeflanschten Schmelzezuleitungen 5 in den im Innern des Koextrusionsadapters 3 ausgebildeten Koextrusionskanal 32.

In an sich bekannter Weise wird somit von nicht dargestellten Extrusionseinrichtungen jeweils ein Schmelzestrom eines thermoplastischen Kunststoffes bereitgestellt und tritt in Pfeilrichtung E1 bzw. E2 über die in den Schmelzezuleitungen 5 ausgebildeten Kanäle 50 in die hieran anschließenden Zuführkanäle 30 bzw. 31 des Koextrusionsadapters 3 ein.

Die beiden Zuführkanäle 30, 31 laufen spitzwinklig und durch eine Zuführspitze 34 des Koextrusionsadapters 3 getrennt in den Koextrusionskanal 32 ein, so daß in an sich bekannter Weise die einzelnen gemäß Pfeilen E1 bzw. E2 zugeführten Schmelzeströme schichtartig aufeinandergelegt und als mehrschichtige Platte oder Folie in Extrusionsrichtung A letztlich aus dem Austrittsspalt 21 der Extrusionsdüse 2 nach Durchlaufen des Koextrusionskanals 32 und des Schmelzekanals 20 der Extrusionsdüse 2 austreten.

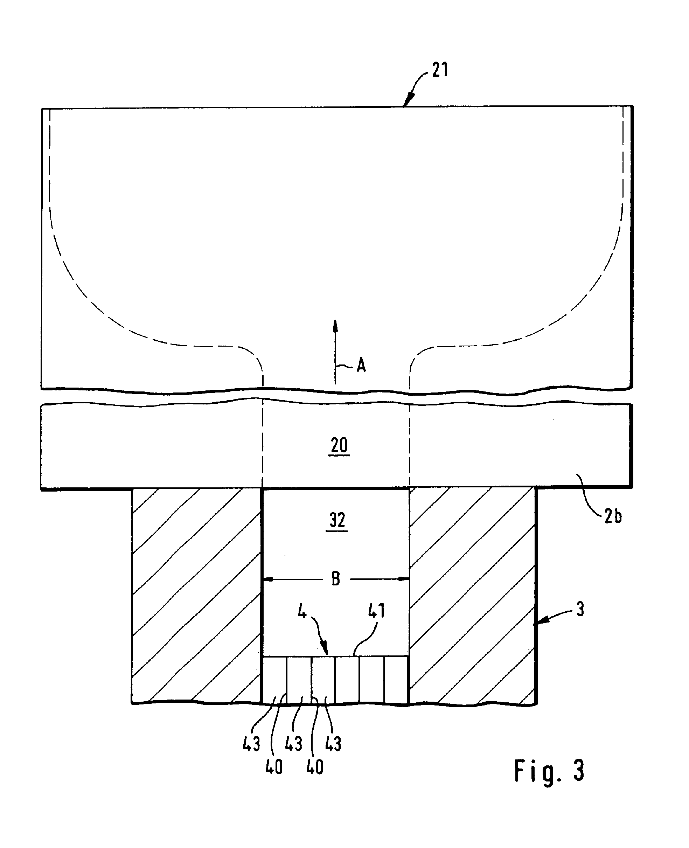

Wie aus der vergrößerten Darstellung gemäß Figur 2 hervorgeht, ist in Verlängerung der die beiden Zuführkanäle 30, 31 voneinander trennenden Zuführspitze 34 ein flexibles Trennelement 4 in Gestalt einer sich über die gesamte Breite B des Koextrusionskanals 32 erstreckenden und mit ihrem freien Ende 41 in den Koextrusionskanal 32 hereinragenden Metallfolie vorgesehen, siehe hierzu auch Figur 3.

Dieses flexible Trennelement 4 bewirkt eine Trennung der aus den Zuführkanälen gemäß Pfeilen E1 und E2 herangeführten und austretenden Schmelzeströme, bevor diese im Koextrusionskanal 32 in der bereits beschriebenen Weise aufeinandergeschichtet werden.

Aufgrund der dem flexiblen Trennelement 4 innewohnenden Flexibilität und Verformbarkeit paßt sich dieses selbsttätig an die vorherrschenden Strömungsverhältnisse in den Zuführkanälen 30, 31 an, die von der jeweiligen Art des zugeführten Schmelzestroms an thermoplastischem Kunststoff, den jeweiligen Volumenströmen und weiteren Faktoren abhängen.

Im Ausführungsbeispiel gemäß Darstellung der Figur 2 ist beispielsweise ersichtlich, daß offensichtlich der Schmelzestrom gemäß Pfeil E1, welcher durch den Zuführkanal 30 fließt, einen stärkeren Druck auf das Trennelement 4 ausübt, als es beim Schmelzestrom gemäß Pfeil E2 der Fall ist, welcher durch den Zuführkanal 31 in den Koextrusionskanal 32 einmündet. Die nach dem Vorbeiströmen der beiden Schmelzeströme am Trennelement 4 sich ausbildende Grenzschicht G ist demzufolge aus der Mittellage nach unten verschoben, d. h. der gemäß Pfeil E1 herangeführte Schmelzestrom nimmt im Koextrusionskanal 32 einen größeren Raum als der gemäß Pfeil E2 herangeführte Schmelzestrom ein, wobei jedoch insgesamt eine stabile Grenzschicht G zwischen beiden Schichten infolge des Trennelementes 4 ausgebildet wird.

Ändern sich diese Strömungsverhältnisse, so paßt sich das Trennelement 4 aufgrund seiner Flexibilität selbsttätig hieran an, indem es sich so einstellt, daß beidseits, d. h. oberhalb und unterhalb des Trennelementes gleiche Druckverhältnisse herrschen und gewährleistet weiterhin homogene Grenzschichten G.

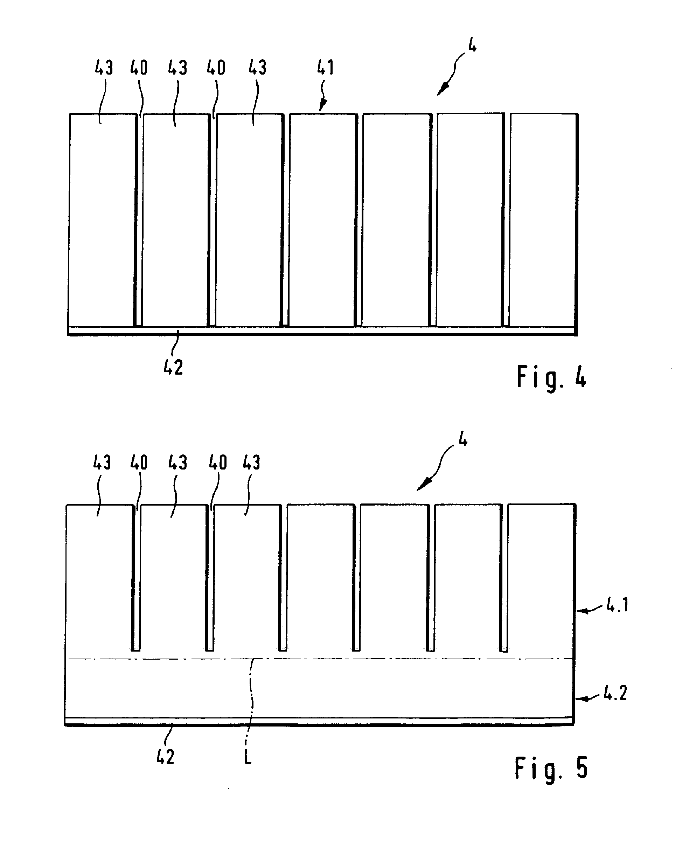

Wie in näheren Einzelheiten auch aus den weiteren Darstellungen gemäß Figuren 3 und 4 ersichtlich, ist das Trennelement 4, welches sich wie bereits erwähnt über die gesamte Breite B des Koextrusionskanals 32 quer zur Extrusionsrichtung A erstreckt, ausgehend von seinem freien, in den Koextrusionskanal 32 hineinragenden Ende 41 kammartig in einzelne Abschnitte 43 unterteilt, die jeweils von parallelen und von dem freien Ende 41 ausgehenden kammartigen Schlitzen 40 voneinander abgeteilt sind. Die Schlitze erstrecken sich jeweils in Extrusionsrichtung A. Jeder Abschnitt 43 weist dabei gleiche Größe im Vergleich zu den übrigen Abschnitten 43 auf, wobei die Trennung durch die kammartigen Schlitze bewirkt, daß sich jeder Abschnitt 43 unabhängig von den benachbarten Abschnitten 43 in der bereits anhand der Figur 2 erläuterten Weise in Abhängigkeit von den jeweiligen Strömungsverhältnissen in den Zuführkanälen 30, 31 flexibel bewegen kann.

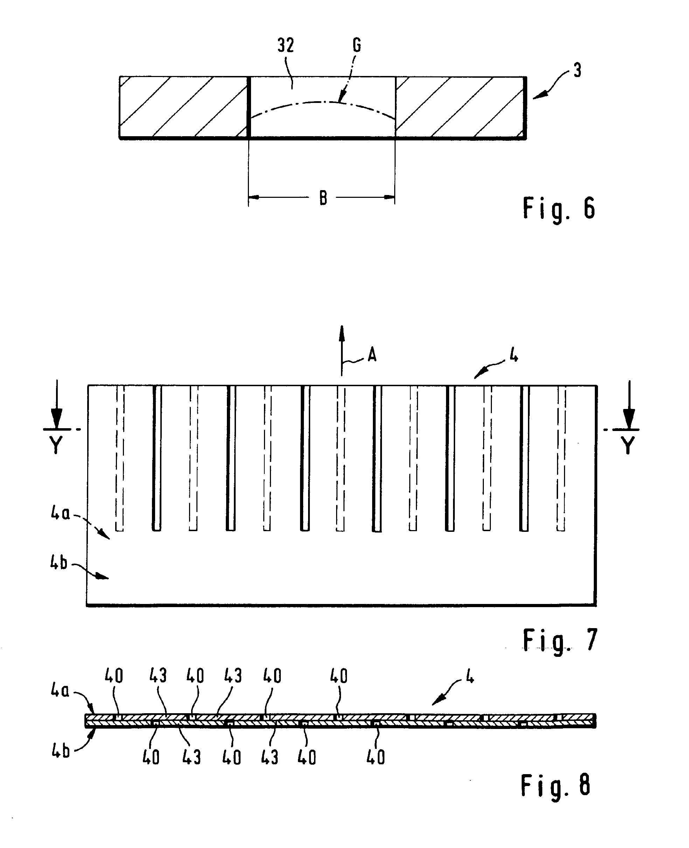

Ein in der Werkzeuggeometrie gegebenenfalls zugrunde gelegtes Querprofil der zugeführten Schmelzeströme quer zur Extrusionsrichtung kann von daher durch die unterschiedliche Beweglichkeit der einzelnen Abschnitte 43 quer zur Extrusionsrichtung A aufrechterhalten werden und wird nicht durch das Trennelement 4 gestört, wie es bei einem über die gesamte Breite B des Koextrusionsadapters 32 einstückig und durchgängig verlaufenden Trennelement 4 der Fall wäre. Die Figur 6 zeigt schematisch anhand der Grenzschicht G ein solches gewolltes und durch das Trennelement 4 nicht beeinflußtes Querdickenprofil in einem möglichen Beispiel.

Den Darstellungen gemäß Figuren 2 und 4 ist überdies noch zu entnehmen, daß das flexible Trennelement mit seinem dem freien und in den Koextrusionskanal 32 hineinragenden Ende 41 abgewandten Ende in der Zuführspitze 34 des Koextrusionsadapters 3 in einer dort ausgebildeten Einstecknut 33 gehaltert ist, wozu der entsprechende Bereich 42 des Trennelementes 4 mit einer in die Einstecknut 33 angepaßten Verdickung ausgebildet sein kann.

In der Figur 5 ist eine alternative Ausführungsform des flexiblen Trennelementes 4 dargestellt, welches ebenfalls quer zur Extrusionsrichtung A kammartig geschlitzt und mittels der kammartigen Schlitze 40 in gleich große Abschnitte 43 des Trennelementes 4 unterteilt ist.

Im Vergleich zu dem in der Figur 4 dargestellten Ausführungsbeispiel sind jedoch die kammartigen Schlitze 40 nicht bis zum dem freien Ende 41 gegenüberliegenden Ende 42 des Trennelementes 4 durchgehend ausgebildet, sondern nur im in den Koextrusionskanal hineinragenden Bereich des Trennelementes 4 ausgebildet.

In Einbauposition des Trennelementes 4 liegen zwei durch eine Trennlinie L voneinander unterteilte Bereiche 4.1 und 4.2 des Trennelementes vor, nämlich der in den Koextrusionskanal 32 hineinragende Bereich 4.1 und der in der Einstecknut 33 des Koextrusionsadapters 3 gehalterte Bereich 4.2 mit der am Ende desselben ausgebildeten Verdickung 42 für ein Hintergreifen der einen entsprechend ausgebildeten Einstecknut 33.

Die für die gewünschte unabhängige Beweglichkeit der einzelnen Abschnitte 43 erforderlichen kammartigen Schlitze 40 sind hingegen nur im in den Koextrusionskanal 32 hineinragenden Bereich 4.1 des Trennelementes 4 ausgebildet.

Schließlich wäre es auch in einer weiteren alternativen Ausführungsform denkbar, eine Vielzahl einzelner gleich groß ausgebildeter Abschnitte 43 quer zur Extrusionsrichtung zur gemeinsamen Ausbildung eines sich über die gesamte Breite B des Koextrusionskanals 32 erstreckenden flexiblen Trennelementes 4 aneinanderzureihen.

Die Figur 7 zeigt eine weitere mögliche Ausführungsform des Trennelementes 4. Hierbei wird das Trennelement 4 von mehreren, hier zwei aufeinanderliegend angeordneten Trennelementlagen 4a, 4b gebildet, die entsprechend den Trennelementen 4 gemäß Figur 4 bzw. 5 kammartig geschlitzt ausgebildet sind. Das Trennelement 4 gemäß Figur 7 ist somit mehrlagig, hier zweilagig ausgebildet.

Wesentlich ist jedoch, daß die einzelnen Schlitze 40 der Trennelementlagen 4a, 4b quer zur Extrusionsrichtung A nicht deckungsgleich übereinanderliegen, sondern versetzt zueinander angeordnet sind, wie insbesondere auch aus der Schnittdarstellung gemäß Figur 8 ersichtlich ist. Durch diese Anordnung wird die Flexibilität des solchermaßen mehrlagig ausgebildeten Trennelementes 4 nicht oder nur unwesentlich beeinträchtigt, jedoch wird zuverlässig verhindert, daß sich die getrennt zugeführten Schmelzeströme in unerwünschter Weise durch die Schlitze des Trennelementes 4 hindurch austauschen.

Neben der Ausbildung des flexiblen Trennelementes aus einer Metallfolie einer Dicke von 0,05 bis 0,5 mm oder einem leicht plastisch verformbaren Metallblech können auch andere ausreichende Flexibilität und Temperaturfestigkeit bietende Materialien zur Anwendung kommen.

Auch kann der Extrusionsadapter 3 abweichend von den dargestellten Ausführungsbeispielen mehr als zwei Zuführkanäle 30, 31 aufweisen, so daß entsprechend auch eine mehrschichtige Folie oder Platte mit mehr als zwei Schichten ausgebildet wird. In einem solchen Fall kann sodann zwischen den benachbart in den Koextrusionskanal 32 einmündenden Zuführkanälen jeweils ein Trennelement 4 vorgesehen sein.

## Patentansprüche

1. Extrusionswerkzeug (1) zur Koextrusion mehrerer Schmelzeströme thermoplastischer Kunststoffe zu einer mehrschichtigen Platte oder Folie, enthaltend
a) eine Extrusionsdüse (2) mit einem zu einem Austrittsspalt (21) führenden Schmelzekanal (20), durch welchen die mehreren Schmelzeströme zu der mehrschichtigen Platte oder Folie in einer Extrusionsrichtung (A) extrudierbar sind;
b) einen Koextrusionsadapter (3) mit einem mit dem Schmelzekanal (20) der Extrusionsdüse (2) verbindbaren Koextrusionskanal (32) und mehreren Zuführkanälen (30, 31), die in den Koextrusionskanal (32) zwecks Zuführung der einzelnen Schmelzeströme einmünden; und
c) ein im Koextrusionsadapter (3) angeordnetes und in den Koextrusionskanal (32) zwischen zwei benachbarten Zuführkanälen (30, 31) hineinragendes flexibles Trennelement (4) zum Trennen der aus den Zuführkanälen (30, 31) austretenden Schmelzeströme vor deren Zusammenführung im Koextrusionskanal (32) unter selbsttätiger Anpassung an die Strömungsverhältnisse in den Zuführkanälen (30, 31),
**dadurch gekennzeichnet, daß** das Trennelement (4) in Extrusionsrichtung (A) kammartig geschlitzt ausgebildet ist.

2. Extrusionswerkzeug (1) nach Anspruch 1, **dadurch gekennzeichnet, daß** sich das Trennelement (4) über die gesamte Breite (B) des Koextrusionskanals (32) quer zur Extrusionsrichtung (A) erstreckt.

3. Extrusionswerkzeug (1) nach Anspruch 1 oder 2, **dadurch gekennzeichnet, daß** das Trennelement (4) in einer Einstecknut (33) im Koextrusionsadapter (3) gehaltert ist.

4. Extrusionswerkzeug (1) nach Anspruch 3, **dadurch gekennzeichnet, daß** die kammartigen Schlitze (40) im Trennelement (4) nur im in den Koextrusionskanal (32) hineinragenden Bereich (4.1) des Trennelementes ausgebildet sind.

5. Extrusionswerkzeug (1) nach einem der Ansprüche 1 bis 4, **dadurch gekennzeichnet, daß** zwischen den kammartigen Schlitzen (40) des Trennelementes (4) Abschnitte (43) des Trennelementes (4) gleicher Größe ausgebildet sind.

6. Extrusionswerkzeug (1) nach einem der Ansprüche 1 bis 5, **dadurch gekennzeichnet, daß** die benachbarten Zuführkanäle (30, 31) spitzwinklig in den Koextrusionskanal (32) einmünden und mittels einer entsprechend spitzwinkligen Zuführspitze (34) des Koextrusionsadapters (3) voneinander abgeteilt sind und das Trennelement (4) in Verlängerung der Zuführspitze (34) in den Koextrusionskanal (32) hineinragt.

7. Extrusionswerkzeug (1) nach einem der Ansprüche 1 bis 6, **dadurch gekennzeichnet, daß** das Trennelement (4) von einer flexiblen Metallfolie oder einem flexiblen Metallblech oder einem leicht plastisch verformbaren Metallblech in einer Dicke von 0,05 bis 0,5 mm gebildet ist.

8. Extrusionswerkzeug (1) nach einem der Ansprüche 1 bis 7, **dadurch gekennzeichnet, daß** die Extrusionsdüse (2) als Breitschlitzdüse mit einem langgestreckten Austrittsspalt (21) ausgebildet ist.

9. Extrusionswerkzeug (1) nach einem der Ansprüche 1 bis 8, **dadurch gekennzeichnet, daß** das Trennelement (4) mehrere aufeinanderliegende Trennelementlagen (4a, 4b) umfaßt, die jeweils in Extrusionsrichtung (A) kammartig geschlitzt ausgebildet sind, wobei die einzelnen Schlitze (40) der aufeinanderliegenden Trennelementlagen (4a, 4b) quer zur Extrusionsrichtung (A) versetzt zueinander angeordnet sind.
